# EUROPEAN PATENT SPECIFICATION

(11) **EP 2 376 386 B1**
(45) Date of publication and mention of the grant of the patent: **04.06.2014**
(21) Application number: 10707974.1
(22) Date of filing: 12.01.2010
(51) Int. Cl.: C01G 23/047, C01G 23/053, C25D 1/00

(54) **ONE STEP ELECTROCHEMICAL PROCESS FOR THE SYNTHESIS OF PURE RUTILE TITANIUM DIOXIDE NANONEEDLES**
ELEKTROCHEMISCHES EIN-SCHRITT-VERFAHREN ZUR SYNTHESE REINER RUTILTITANDIOXID-NANONADELN
PROCÉDÉ ÉLECTROCHIMIQUE EN UNE ÉTAPE POUR LA SYNTHÈSE DE NANO-AIGUILLES DE DIOXYDE DE TITANE RUTILE PUR

(30) Priority: 12.01.2009 IN DE00492009
(43) Date of publication of application: 19.10.2011
(73) Proprietor: Council Of Scientific & Industrial Research, New Delhi 110 001 (IN)
(72) Inventor: HYAM, Rajeshkumar, Shankar, Pune 411 008 Maharashtra (IN); BHOSALE, Reshma, Kanta, Pune 411 008 Maharashtra (IN); OGALE, Satishchandra, Balkrishna, Pune 411 008 Maharashtra (IN)
(74) Representative: Jakobsson, Jeanette Helene
(86) International application number: PCT/IN2010/000022
(87) International publication number: WO 2010/079515

(56) References cited:
- EP-A1- 1 726 567
- K.S. RAJA, M. MISRA, V.K. MAHAJAN, T. GANDHI, P. PILLAI, S.K. MOHAPATRA: "Photo-electrochemical hydrogen generation using band-gap modifiednanotubular titanium oxide in solar light" JOURNAL OF POWER SOURCES, vol. 161, 2006, pages 1450-1457, XP002580344 DOI: doi:10.1016/j.jpowsour.2006.06.044
- DAWEI GONG, CRAIG A. GRIMES AND OOMMAN K. VARGHESE, WENCHONG HU, R.S. SINGH, AND ZHI CHEN, ELIZABETH C. DICKEY: "Titanium oxide nanotube arrays prepared byanodic oxidation" J. MATER. RES., vol. 16, no. 12, December 2001 (2001-12), pages 3331-3334, XP002580345

## Description

### Field of the Invention:

The invention relates to a one step electrochemical process for the synthesis of pure rutile titanium dioxide nanoneedles with high aspect ratio at room temperature. Further the invention relates to a room temperature process for the synthesis of rutile titanium dioxide nanoneedles.

### Background and prior art:

Titanium dioxide occurs in nature as rutile, anatase and brookite. Rutile titanium dioxide is widely used as ultraviolet protecting agent, optical coatings, beam splitters and antireflection coatings. It can also be used as a humidity sensor and as high-temperature oxygen sensor.

A variety of synthetic procedures have been documented for control on the phase formation and morphology of TiO₂ nanoparticles. Usually, these synthetic routes lead to mixture of anatase and rutile polymorphs.

Rutile TiO₂ powders are conventionally obtained by phase transformation of anatase to rutile at more than 450 °C or by flame oxidation of TiCl₄. These methods result in larger titania particles with lower surface/volume ratio. The alternative to control the phase and size of rutile titania particles involves the use of a precursor along with other mineralizers and inorganic additives, like SnCl₄, NH₄Cl, NaCl or SnO₂ that are difficult to remove and have an undesirable influence in several applications. Controlled synthesis of crystalline rutile nano-TiO₂ without using any inorganic additives require higher temperatures, which result in an increase in crystallite size. Low-temperature preparation of nano-rutile TiO₂ with higher specific surface area is possible under acidic conditions by hydrothermal synthesis route. But, this process is extremely time consuming, requiring about two-three days with poor yields.

W02008127508 titled "Titania Nanotubes Prepared By Anodization In Chloride-Containing Electrolytes" by Northeastern University dated 23.10.2008; discloses a method of preparing titania nanotubes on the surface of Ti foil leading to rapid production of titania nanotubes of about 25 nm diameter and high aspect ratio, which can be organized into bundles and tightly packed parallel arrays. This application discloses use of Ti foil as anode and platinum rod as cathode with an electrolyte solution consisting of chloride ions and the reaction is carried out at room temperature with a pH ranging 1 to 7. But Ex. 4 refers to the X-ray diffraction of TiO₂ nanotubes, wherein the as-synthesized samples were amorphous prior to annealing and the annealed samples were predominantly anatase with traces of rutile.

Nakayam et al in "Anodic formation of high aspect ratio titania nanotubes", ECS Meeting Abstracts 502, 819(2006) reported an anodization process for the preparation of anatase TiO₂, the material formed by the Nakayama et al process was nanotubes. The nanotubes were formed on the surface of Ti foils.

Juha-Pekka et al in an article titled "The effect of acidity in low-temperature synthesis of titanium dioxide" in Journal of crystal growth 2007, Volume 34, No 1, 179-183 disclose preparation of crystalline titanium dioxide powders by the modified alkoxide method of low temperature. They further state that lower acidity promotes anatase phase, while in case of higher amount of acid the final phase form is rutile.

Aruna et al.in Journal of Materials Science 2000, 10, 2388-2391 and Zhang et al. in Langmuir 2003, 19, 967-971 titled "Preparation of Oxide Nanocrystals with Tunable Morphologies by the Moderate Hydrothermal Method: Insights from Rutile" prepared nanosize rutile titania by hydrothermal and thermal hydrolysis of titanium(IV) isopropoxide (Ti[OCH(CH₃)₂]) and titanium(IV) chloride (TiCl₄) respectively.

Pedraza et al. in Journal of Physics and Chemistry of Solids 60 (1999) 445-448 showed room temperature preparation of high surface area rutile TiO₂ using TiCl₃ in O₂. But the processes followed by Aruna et al and Pedraza et al led to formation of spherical or irregularly shaped rutile titania nanoparticles. Amorphous precipitates of rutile titania nanocrystals have been obtained by hydrothermal treatment or peptization of titanium alkoxide at 433-573 K. Keisuke Nakayam et. al. in Electrochemical and Solid-State Letters, 11 (3) C23-C26 (2008) have disclosed an anodization process for the preparation of TiO₂, which resulted in anatase TiO₂ as nanotubes.

K.S. RAJA, M. MISRA, V.K. MAHAJAN, T. GANDHI, P. PILLAI, S.K. MOHAPATRA: "Photo-electrochemial hydrogen generation using band-gap modified nanotubular titanium oxide in solar light" JOURNAL OF POWER SOURCES, vol. 161, 2006, pages 1450-1457, DOI: doi: 10.1016/j.jpowsour.2006.06.044 describes a process for anodization of Ti in acidified fluoride solutions, resulting in an ordered nanotubular titanium oxide surface.

EP 1 726 567 relates to a process for anodizing a titanium metal or an allow mainly containing titanium, wherein the anodization is carried out in a electrolyte solution containing a halogen atom-containing ion.

DAWEI GONG, CRAIG A. GRIMES AND OOMMAN K. VARGHESE, WENCHONG HU, R.S. SINGH, AND ZHI CHEN, ELISABETH C. DICKEY: "Titanium oxide nanotube arrays prepared by anodic oxidation" J. MATER RES., vol. 16, no. 12, December 2001 (2001-12), pages 3331-3334, describes fabrication of titanium oxide nanotubes by anodic oxidation of a pure titanium sheet in an aqueous solution containing 0.5 to 3.5 wt% hydrofluoric acid. The tubes are aligned and organized into high-density uniform arrays. The tops of the tubes are open, while the bottoms of the tubes are closed, forming a barrier layer structure similar to that of porous alumina.

Thus we observe that prior art processes to prepare rutile titania are spontaneous, with little or no control on morphology, unless templates are employed. Further, the results of the prior art processes is a mixture of spherical, broom like, or rod-shaped rutile titania. Also, the separation of nanocrystals of any particular morphology from the others is very tedious. Further no prior art process disclose a single-step room temperature process to synthesize rutile titania nanoneedles. Also, the prior art processes suffer from the drawback of having to conduct processes above room temperature, about 50 °C.

Therefore there exists a need from prior art review to evolve a simple, preferably single step process for the synthesis of rutile titanium dioxide at room temperature. There also exists a need to evolve a process for the synthesis of TiO₂ with control on morphology.

Also, there exists a need to synthesize rutile titanium dioxide nanoneedles by a simple process that is carried out at room temperature, which results in nanoneedles of high aspect ratios (ratio of length to diameter).

### Summary of the invention:

Accordingly, the present invention provides a one step electrochemical process for the synthesis of pure rutile titanium dioxide nanoneedles with high aspect ratio at room temperature. The process involves application of electric field between a cathode made of noble metal and Ti as anode within a bath comprising of acid and water of desired pH. The nanoneedles of rutile TiO₂ are formed by the dissolution of Ti anode. The aspect ratio of the nanoneedles is greater than 10.

In an embodiment, a one step electrochemical process for the synthesis of pure rutile titanium dioxide nanoneedles with high aspect ratio at room temperature, wherein the said process comprising the steps of :
a.maintaining a bath of a solution of mineral acid in water at temperature ranging from 20-30 °C, wherein the cathode is a noble metal and the anode is Ti;
b. applying electric voltages of the order of 8-30 volts between the two electrodes of step (a) stationed at about 1-2 cms apart, resulting in the instantaneous evolution of hydrogen gas at cathode and anodic dissolution of Ti into pure rutile TiO₂ nanoneedles in the bath ;
c. washing the nanoneedles as obtained in step (b) and air-drying at ambient temperature ranging between 20-30 °C to obtain rutile titanium dioxide nanoneedles with aspect ratio greater than 10.

In yet another embodiment, a process as claimed in claim 1, wherein noble metal used for cathode in step (a) is platinum.

In yet another embodiment, a process as claimed in claim 1, wherein mineral acid used in step (a) is HClO₄.

In yet another embodiment, a process as claimed in claim 1, wherein pH of the acid solution is below 2.

In yet another embodiment, a process as claimed in claim 1, wherein Ti anode used in step (a) is selected from the group wire, foil, plate and rod.

In yet another embodiment, a process as claimed in claims 1, Ti anode used in step (a) is a foil.

In yet another embodiment, a process as claimed in claim 1, wherein current density in the foil surface is in the range of 80-120 mAmps/cm² for rutile phase titanium dioxide nanoneedles formation.

In yet another embodiment, a process as claimed in claim 1, wherein thickness of Ti anode foil is at least 0.5 mm.

### Description of drawings:

Figure 1 shows the XRD for phase pure rutile TiO₂ nanoneedles.
Figure 2 shows HR-TEM (High Resolution- Transmission Electron Microscopy) picture of as synthesized rutile TiO₂ nanoneedles.
Figure 3 shows HR-TEM. The interplanar spacing was compared with standard PCPDFWIN data 211276 and matches with the 110 plane of rutile TiO₂.
Figure 4 shows the SAED pattern of the room temperature synthesized rutile Ti02 nanoneedle powder. The diffraction rings are matching with that of rutile TiO₂ (PCPDFWIN data 211276).

### Detailed Description of Invention:

In order to achieve the objectives of the invention, a one step, room temperature electrochemical process for the synthesis of rutile titanium dioxide nanoneedles with high aspect ratio is disclosed herein.

The one step room temperature electrochemical process for the synthesis of rutile titanium dioxide nanoneedles with high aspect ratio comprises:
a) maintaining a bath of a solution of mineral acid in water at temperature ranging from 20-30 deg C, wherein the cathode is a noble metal and the anode is Ti;
b) applying electric voltages of the order of 8-30 volts between the two electrodes of step (a) stationed at about 1-2 cms apart, resulting in the instantaneous evolution of hydrogen gas at cathode and anodic dissolution of Ti into rutile TiO₂ nanoneedles in the bath and
c) washing the nanoneedles of step (b) and air-drying at ambient temperature to obtain rutile titanium dioxide nanoneedles of the invention with high aspect ratio.

The concentration of the acid solution is such that the pH is below 2. The mineral acid of the invention is HClO₄.

The cathode of the process of the invention is selected from the group comprising of noble metals with high conductivity, preferably platinum.

Ti is in a physical form selected from wire, foil, plate, rod and such like, preferably foil. The Ti used is phase pure and preferably of a thickness of at least 0.5 mm. The current density in the foil surface is 80-120 mAmps/cm² for rutile phase formation.

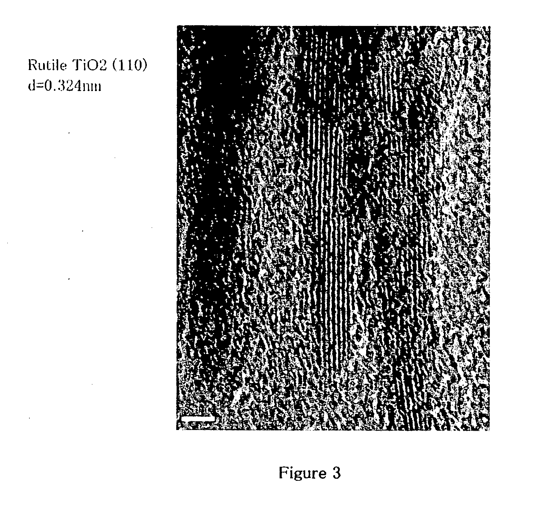

The aspect ratio of greater than 10 for the rutile nanoneedles of TiO₂ is as seen from HR-TEM, figure 3.

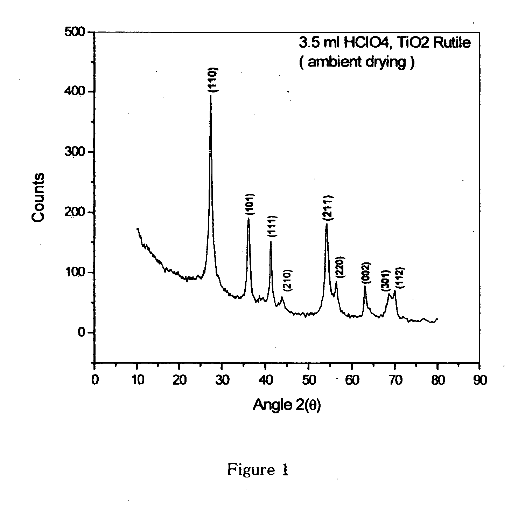

The rutile nanoneedles of high aspect ratio formed by the room temperature electrochemical process of the invention are characterized herein by XRD and HR-TEM as seen in figures 1-3.

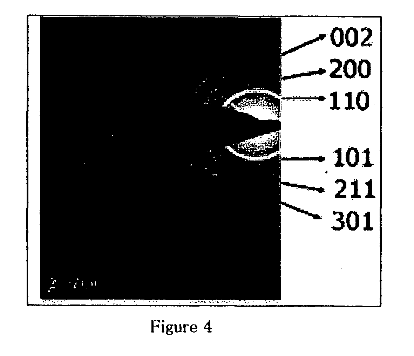

The TiO₂ is characterized by XRD data of -Figure 1 and HRTEM images in figures 3 and 4.

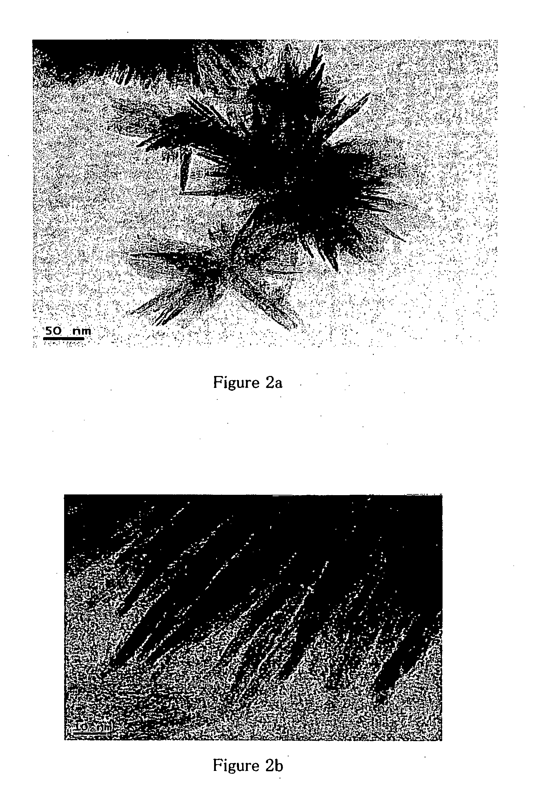

The nanoneedles of the invention are seen in HR-TEM-image of figures 2 and 3.

The XRD data of figure 1 confirms the phase purity of rutile nanoneedles of titanium dioxide, as is further evident from figures 2 and 3.

### Example

Maintaining an anodizing bath of a solution of 3.5 ml of HClO₄ in 30 ml water at 25 deg C. Platinum was used as cathode and Titanium foil as anode and the distance between the foils was I cm. Applying electric voltages of the order of 8 volt between the two electrodes, resulting in the instantaneous evolution of hydrogen gas at cathode and anodic dissolution of Ti into rutile TiO₂ nanoneedles in the bath and washing the nanoneedles and air-drying at ambient temperature to obtain rutile titanium dioxide nanoneedles.

### Advantages of the present invention

**1.** The present invention provides an electrochemical process for the synthesis of rutile TiO₂ nanoneedles in one step only.
**2.** In the present invention pure rutile TiO₂ is formed.
**3.** No intermediate amorphous powder or anatase phase is formed and hence does not require any heat treatment to form rutile TiO₂ which reduces the time for synthesis and cost too.
**4.** The present invention has given significant improvement in the synthesis routes for phase pure rutile TiO₂ synthesis which will make it easier, cheaper and will take less time for its large scale synthesis to fullfill its ever increasing demands for applications such as photocatalysis and biomedicine etc.

## Claims

1. A one step electrochemical process for the synthesis of pure rutile titanium dioxide nanoneedles with high aspect ratio at room temperature, wherein the said process comprising the steps of :
a.maintaining a bath of a solution of mineral acid in water at room temperature ranging from 20-30 °C, wherein the cathode is a noble metal and the anode is Ti;
b.applying electric voltages of the order of 8-30 volts between the two electrodes of step (a) stationed at about 1-2 cms apart, resulting in the instantaneous evolution of hydrogen gas at cathode and anodic dissolution of Ti into pure rutile TiO₂ nanoneedles in the bath ;
c.washing the nanoneedles as obtained in step (b) and air-drying at ambient temperature ranging between 20-30 °C to obtain rutile titanium dioxide nanoneedles with aspect ratio greater than 10.

2. A process as claimed in claim 1, wherein noble metal used for cathode in step (a) is platinum.

3. A process as claimed in claim 1, wherein mineral acid used in step (a) is HClO₄.

4. A process as claimed in claim 1, wherein the concentration of the acid solution in step (a) is to maintain pH below 2.

5. A process as claimed in claim 1, wherein Ti anode used in step (a) is selected from the group wire, foil, plate and rod.

6. A process as claimed in claims 1, Ti anode used in step (a) is a foil.

7. A process as claimed in claim 1, wherein current density in the foil surface is in the range of 80-120 mAmps/cm² for rutile phase titanium dioxide nanoneedles formation.

8. A process as claimed in claim 1, wherein thickness of Ti anode foil is at least 0.5 mm.

## Patentansprüche

1. Einschrittiges elektrochemisches Verfahren zur Synthese von reinen Rutil-Titandioxid-Nanonadeln mit hohem Aspektverhältnis bei Raumtemperatur, wobei das Verfahren folgende Schritte umfasst:
a. Halten eines Bads einer Lösung von Mineralsäure in Wasser bei Raumtemperatur im Bereich von 20-30°C, wobei sich bei der Kathode um ein Edelmetall handelt und es sich bei der Anode um Ti handelt;
b. Anlegen von elektrischen Spannungen der Größenordnung von 8-30 Volt zwischen den beiden in einem Abstand von etwa 1-2 cm angeordneten Elektroden von Schritt (a), was zu sofortiger Entwicklung von Wasserstoffgas an der Kathode und anodischer Auflösung von Ti zu reinen Rutil-TiO₂-Nanonadeln in dem Bad führt;
c. Waschen der wie in Schritt (b) erhaltenen Nanonadeln und Trocknen an der Luft bei Umgebungstemperatur im Bereich zwischen 20-30°C zum Erhalt von Rutil-Titandioxid-Nanonadeln mit einem Aspektverhältnis von mehr als 10.

2. Verfahren nach Anspruch 1, bei dem es sich bei dem für die Kathode in Schritt (a) verwendeten Edelmetall um Platin handelt.

3. Verfahren nach Anspruch 1, bei dem es sich bei der in Schritt (a) verwendeten Mineralsäure um HClO₄ handelt.

4. Verfahren nach Anspruch 1, bei dem die Konzentration der Säurelösung in Schritt (a) zum Halten des pH-Werts unter 2 dient.

5. Verfahren nach Anspruch 1, bei dem die in Schritt (a) verwendete Ti-Anode aus der Gruppe Draht, Folie, Platte und Stab ausgewählt wird.

6. Verfahren nach Anspruch 1, wobei es sich bei der in Schritt (a) verwendeten Ti-Anode um eine Folie handelt.

7. Verfahren nach Anspruch 1, bei dem die Stromdichte in der Folienoberfläche für die Bildung von Rutilphase-Titandioxid-Nanonadeln im Bereich von 80-120 mA/cm² liegt.

8. Verfahren nach Anspruch 1, bei dem die Dicke der Ti-Anodenfolie mindestens 0,5 mm beträgt.

## Revendications

1. Procédé électrochimique en une étape pour la synthèse de nanoaiguilles de dioxyde de titane rutile pur avec un rapport de forme élevé à température ambiante, ledit procédé comprenant les étapes consistant à :
a. maintenir un bain d'une solution d'acide minéral dans l'eau à une température ambiante allant de 20 à 30 °C, la cathode étant un métal noble et l'anode étant Ti ;
b. appliquer des tensions électriques de l'ordre de 8-30 volts entre les deux électrodes de l'étape (a) placées à environ 1-2 cm l'une de l'autre, se soldant par le dégagement instantané d'hydrogène gazeux à la cathode et la dissolution anodique de Ti en nanoaiguilles de TiO₂ rutile pur dans le bain ;
c. laver les nanoaiguilles telles qu'obtenues à l'étape (b) et les sécher à l'air à une température ambiante variant entre 20 et 30 °C pour obtenir des nanoaiguilles de dioxyde de titane rutile avec un rapport de forme supérieur à 10.

2. Procédé selon la revendication 1, dans lequel le métal noble utilisé pour la cathode à l'étape (a) est le platine.

3. Procédé selon la revendication 1, dans lequel l'acide minéral utilisé à l'étape (a) est HClO₄.

4. Procédé selon la revendication 1, dans lequel la concentration de la solution d'acide à l'étape (a) doit maintenir le pH en dessous de 2.

5. Procédé selon la revendication 1, dans lequel l'anode de Ti utilisée à l'étape (a) est choisie dans le groupe fil, feuille, plaque et tige.

6. Procédé selon la revendication 1, dans lequel l'anode de Ti utilisée à l'étape (a) est une feuille.

7. Procédé selon la revendication 1, dans lequel la densité de courant à la surface de la feuille se situe dans la gamme de 80-120 mA/cm² pour la formation de nanoaiguilles de dioxyde de titane en phase rutile.

8. Procédé selon la revendication 1, dans lequel l'épaisseur de la feuille d'anode de Ti est d'au moins 0,5 mm.
